# EUROPEAN PATENT APPLICATION

(11) **EP 4 418 178 A1**
(43) Date of publication of application: **21.08.2024**
(21) Application number: 24158177.6
(22) Date of filing: 16.02.2024
(51) Int. Cl.: G06Q 10/0631, A61H 33/00, G06Q 50/06, G05D 23/19, H04L 12/28

(54) **DEVICE AND METHOD FOR ENERGY CONTROL OF A BATHING SYSTEM**

(30) Priority: 16.02.2023 SE 2350153
(71) Applicant: Zavepower Innovative Technology AB, 352 46 Växjö (SE)
(72) Inventor: Hall, Jens, 352 42 Växjö (SE); Laurin, Magnus, 413 15 Göteborg (SE)
(74) Representative: Industripatent i Växjö AB

(57) **Abstract**

An energy control module (E) for a recreational bathing system (1) comprises a communication unit for input and output of data from a bath control system (C), for regulating the temperature of the bathing system (1). The energy control module (E) is configured to send data from the bath control system (C) to a remote server (S) and to receive a decision whether to heat the bathing system (1) therefrom. The energy control module (E) is configured to formulate and send instructions to the bath control system (C) based on this decision.

A method for controlling the energy used in the bathing system (1) comprises the steps: connecting the energy control module (E) to the bath control system (C); receiving (6) status updates therefrom; sending (8) information to a server (S), which also receives an energy scarcity parameter; making (9) a decision whether to heat the bathing system (1); sending the result of the decision to the energy control module (E), which sends instructions (11, 13, 16, 18, 20) to the bath control system (C).

## Description

### Field of the invention

The present invention relates to an energy control module for a recreational bathing system, the bathing system comprising a bath, a heater for the bath, a thermostat and a bath control system with an interface for receiving status information, the energy control module comprising a communication unit for input and output of data from the bath control system and instructions to the bath control system, such that the temperature of the bathing system may be regulated.

The present invention also relates to a method for controlling the energy used in a bathing system, the bathing system comprising a bath, a heater for the bath, a thermostat and a bath control system with an interface, the method comprising the steps: an energy control module is connected to the bath control system via the interface, and the energy control module receives status updates from the bath control system.

### Background

US8612061B2 discloses a method and device for a bathing system with a heating module and filtration system. The system performs heating and filtration of the water in the bath during time intervals with a lower energy price. An energy provider supplies information of the different time intervals via a network connection. The user selects one of several operational modes, which to a varying degree take account of the different time intervals, and the cost of running the bathing system may be lowered.

In the prior art method and device, the heating takes place according to a predetermined schedule. Although it may be possible to change the schedule, the system depends on there being peak periods, off-peak periods, and shoulder periods appearing with some regularity and predictability. It does not take account of hourly changing demands for electricity nor possible scarcities of electricity.

### Summary

It is an object of the present invention to solve, or at least mitigate, parts or all of the above mentioned problems. To this end, there is provided an energy control module configured to send data from the bath control system to a remote server, and configured to receive a decision whether to heat the bathing system from the remote server, and the energy control module is configured to formulate and send instructions to the bath control system based on the decision of the remote server, such that the consumed energy for heating the bath is minimized.

Hereby an energy control module may be connected to a pre-existing bathing system, in order to reduce the consumed amount of energy, in particular the amount of energy consumed during times of energy scarcity. By configuring the energy control module such that it may send data to a remote server, the processing of output data from the bath system may be made more efficient. The processing, as well as additional information needed for the processing, may also be adapted with short notice. Further the remote server may service a large number of energy control modules, thereby reducing the cost of each energy control module, since the design and functions thereof may be simplified.

In one embodiment the energy control module is configured to receive information from units connected to the bath control system and controlled thereby.

Hereby functions that are not related directly to the heating of the bathing system, but indeed to the use thereof, may be controlled by the energy control module as well. The heater or heaters represent, however, the main part of the energy consumption in the bathing system, and the energy control module may hence be focused thereon. There may be practical advantages to controlling other units in the bathing system with the energy control module as well, even though they may not be the major energy consumers. For instance, some units are in use only when the bathing takes place, which is also the time when the temperature of the bath needs to be at its highest. Examples of connected units are, in addition to one or more heaters, a display of the bath control system, a water pump, light units, filtration units, pumps for air bubbles, pumps for massage jets, sanitizing UV light units, etc.

In some embodiments the energy control module is configured to receive serial data from the bath control system via a UART (universal asynchronous receiver-transmitter).

Hereby a reliable and robust means of connection between the energy control module and the bath control system is realized.

According to a second aspect, parts or all of the above mentioned problems are solved, or at least mitigated, by a method wherein the energy control module sends information from the status updates to a server, the server also receives an energy scarcity parameter, the server makes a decision, based on the information from the energy control module and the energy scarcity parameter whether to heat the bathing system, the result of the decision (Yes/No) is sent to the energy control module, the energy control module sends instructions to the bath control system in accordance with the decision.

Hereby the heating of the bathing system may be performed efficiently and taking into account the scarcity of available energy, so that energy may be saved and, in many cases, also costs. In the event of an acute shortage of energy, there may be the risk that consumers may be entirely cut off from the energy supply during some time periods. It is hence in the interest of the user to avoid heating the bath when the energy is scarce, so that the energy supply may not be entirely cut off.

Sending information to a server allows the server to gather information which is applicable to a large number of energy control modules. The information, such as an energy scarcity parameter, may be updated frequently to a single server or a low number of servers, but may be used in decisions for a very large number of energy control modules. In particular, the server may coordinate the heating of a large number of modules, such that they do not all heat at the same time, or such that they do not start the heating at exactly the same time, which would put an undue strain on the energy supplier's systems. In the long run, and on a large scale, distributing energy consumption such that extreme consumption peaks are avoided is desirable from societal and environmental points of view. There may be less need for building additional power plants or for using spare power plants needing fossil fuels with a high negative impact on the environment.

Another possible advantage of using energy responsibly, and avoiding high peaks of energy consumption, is that future restrictions on power consumption may be avoided, such as bans on running or heating certain equipment permanently or during certain time periods. The coordination achieved by sending information of the desired energy consumption to a server, may help in attaining this advantage.

Updates of the software for making decisions of heating may be kept simple, since only the software on the server needs updating. The amount of data sent to and from the energy control modules may be kept at a low level. Also, the amount of software needed in each energy control module may be kept low.

In some instances, artificial intelligence (Al) may be utilized in the method. After receiving updated information of one or more scarcity parameters over a long time period, the system may be able to recognize patterns of energy supply and demand with the use of Al. Hereby it may predict future scarcity or abundance, beyond the supplied information, and an enhanced planning of the heating of both the single bathing system, or of a large number of bathing systems, may be obtained.

In one embodiment the method further comprises the steps: the energy control module selects a rest mode or a ready mode, and the energy control module selects a high temperature range or a low temperature range depending on the result of the decision whether to heat the bathing system.

Hereby a practical execution of the decision of the server to heat the bathing system or not is offered. In a rest mode, heating may be allowed only at the times when other equipment is operated, such as when the water in the bath is circulated and filtrated by a pump. In a ready mode, the heater may be switched on at any time. In a high temperature range, the temperature may be kept between e. g. 26°C and 40°C, provided that the heater is allowed to be switched on. In a low temperature range, the temperature may be kept between e. g. 10°C and 37°C, also provided that the heater may be switched on if needed.

In some embodiments the method further comprises the steps: setting a lowest allowable temperature, comparing the present temperature of the bath to the lowest allowable temperature, and starting the heater of the bath, thereby overriding any current negative decision of the server.

Hereby the bathing system may be protected from freezing. The temperature is typically measured at a sensor, and the lowest allowable temperature must be set with a considerable margin to the freezing point, since the temperature in the parts of the bathing system furthest away from the sensor may drop to considerably lower temperatures than the temperature at the sensor. This temperature difference is also affected by any circulation in the bathing system, the insulation, ambient factors, such as wind and ambient temperature, etc.

In order to ensure that the bathing system is protected from freezing, the heater is switched on regardless of the decision of heating sent from the server, and thereby also regardless of any scarcity of energy.

In some embodiments the method further comprises the steps: an ID of the bath control system is requested by the energy control module, the ID is sent from the bath control system to the energy control module, the energy control module sends a confirmation of receipt of the ID to the bath control system.

Hereby a secure communication and transfer of data between the bath control system and the energy control module is ensured.

In a further embodiment the method comprises the step: the ID is sent from the energy control module to the server.

Hereby the server may be utilized for a large number of bathing systems belonging to different users. The ID may also be communicated to a user's cell phone, either directly from the energy control module or via the server.

In some embodiments the method further comprises the step of: the energy control module decodes the status updates, when they have been received from the bath control system.

Hereby the server need not be adapted to read nor base its calculations and decisions on information in the form of the status updates. Hence the server may receive data from many different types of bath systems, provided that each respective energy control module is adapted to decode the status update from its connected bath control system into information in a format which is readable by the server.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic overview of a bathing system comprising the disclosed device;
Fig. 2 is a flowchart of one method of controlling the temperature in the bathing system.

All the figures are schematic, not necessarily to scale, and generally only show parts which are necessary in order to elucidate the embodiments, wherein other parts may be omitted.

### Detailed description of the exemplary embodiments

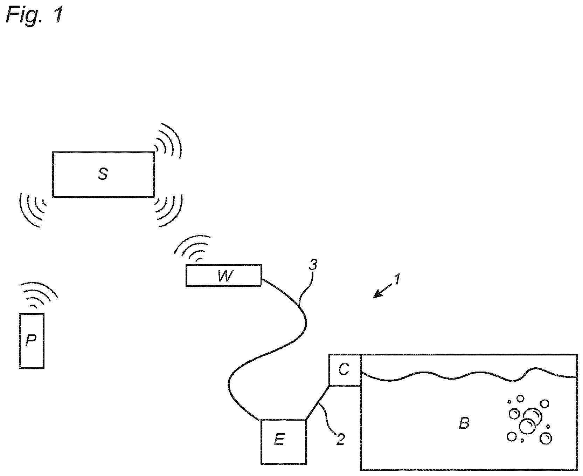

Fig. 1 illustrates a recreational bathing system 1 comprising a bath B, which is a container mainly filled with water. The bath B is large enough to provide room for at least one person being immersed therein. In many embodiments the bath B may accommodate four or more persons in sitting positions. Such bathing systems are often used for relaxation and for social events, in particular in private homes.

The bath B is provided with a heater, or set of heaters, for attaining a comfortable temperature in the bath B, at least when there are people therein. Sensors for determining the temperature and other attributes of the water are also provided. The bath B may also have at least one filter, for filtering the water in the bath. A pump for circulating the water within the bath B and through the filter may also be provided, although it may only run intermittently. Further pumps may be arranged to provide massaging water jets, air bubbles etc. Further units may be provided to dose chemicals in suitable amounts to keep the water clean and free from microorganisms, such as bacteria and algae. The bathing system 1 may also be provided with lighting units, in order to illuminate the bath B and the area around it.

The units connected to the bath B in the bathing system 1 may all be controlled from a bath control system C, which may be arranged physically in close vicinity of the bath B or remotely therefrom. It may be connected by physical wires to the units or may control the units wirelessly. In either case, the control system C has a display and input means to set the status of the units connected to the bath B. The bathing system 1 is functional with the bath B, any comprised units, and the bath control system C, although it is not optimized regarding its energy consumption.

According to the present disclosure, an energy control module E is connected to the bath control system C. In some advantageous embodiments, the connection 2 includes a universal asynchronous receiver-transmitter (UART). Hereby, the energy control module E receives and sends data in a sequential manner. There are numerous other options, such as USB, Bluetooth, or other wireless connections, etc., known in the art for realizing the connection 2, and these options may be used in further embodiments.

The energy control module E is configured to decode the data it receives from the bath control system C. It is for this reason adapted to at least one particular bath control system C, with which it is intended to be used. In some embodiments, the energy control module E may be adapted to receive and decode data in several different formats, possibly after resetting an adjustment switch.

The energy control module E is, in its turn, connected to the internet in any manner known in the art, whereby a number of different embodiments may be formed. In the embodiment illustrated in Fig. 1, there is a physical connection 3 to an internet communication device W, such as a router, etc. In some embodiments, however, this connection 3 may be wireless or accessible via mobile networks. The internet communication device W has the ability to communicate wirelessly with a remote server S via the internet.

The energy control module E is configured to send the decoded data to the server S via the internet communication device W. The server S, in its turn, is configured to retrieve information from other databases, and to use this information in combination with the decoded data to make a decision whether to heat the bath or not. The information retrieved from other databases may comprise an energy scarcity parameter. The scarcity parameter may be the price per energy unit, since the price often reflects the relationship between the supply and demand for a certain commodity. The energy supplier may also provide a parameter reflecting the risk of a total or partial power cut, due to an excessive demand for energy. Other possibilities for a scarcity parameter is that it reflects the share of energy being used relative to the total available energy of the supplier.

The information retrieved by the server S may also comprise parameters regarding the sources of the available energy, such as solar power, hydroelectric power, etc. The server S may be configured to base a decision, wholly or partially, whether to heat or not heat the bath B on parameters regarding the source. As an example, the server S may configured to decide to heat the bath B when there is available solar energy, but not when the energy comes from another source. Hence, energy from the user's own solar panels may be used for the heating instead of being supplied to the energy network.

Further, the server S may be configured to retrieve updates regarding its decision-making process, e. g. updates of its software. Also, it may be configured to send the execution of some parts of its procedure, such as capacity-consuming calculations, to resources outside of the server S, and the result of the calculations are then sent back to the server S.

The server S may be configured to receive information of the user's wishes from the user's cell phone P, and also to send information to the cell phone P, wherein a dedicated app has been downloaded for the control of the bathing system.

The energy control module E is configured to receive, via the internet communication device W the result of the decision, from the server S, either to heat or not to heat the bath B. It is also configured to receive, at the same time, further information of the user's wishes, e. g. of lighting, water jets etc., either directly from the user's cell phone P or via the server S.

The energy control module E is configured to convert the information and the decision into instructions in a format which is readable by the bath control system C, and to send the instructions thereto. The bath control system C is thereby guided by the instructions from the energy control module E of when to heat the bath.

In some embodiments of the disclosure, the energy control module E and the internet communication device W are integrated with the bath control system C into one single unit, and the connections 2, 3 are arranged internally in the integrated unit. In some further embodiments, it may not be possible to physically discern the energy control module E and the internet communication device W in the integrated control system C. Nevertheless, in these embodiments the integrated control system C performs all the functions that are described herein as being performed by the separate units C, E, W. The integrated control system C hence operates according to the same method as the system illustrated in Fig. 1.

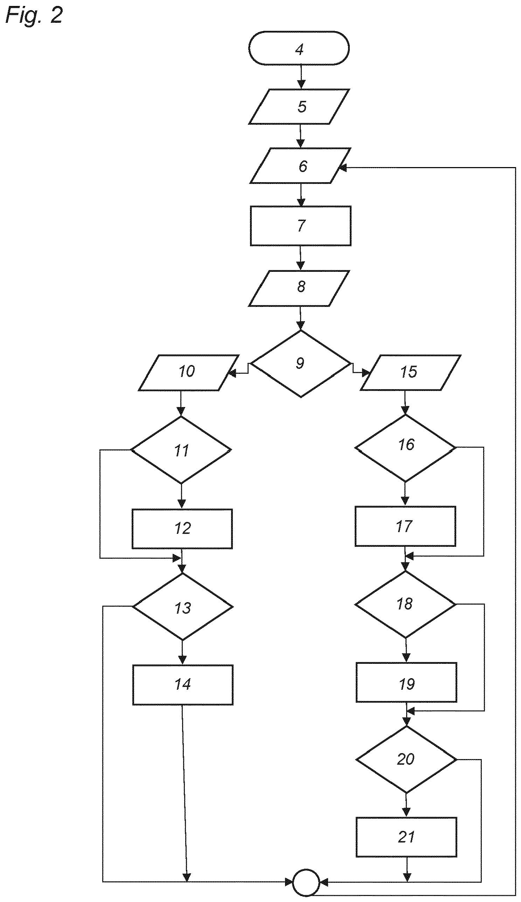

Fig. 2 illustrates the steps of one method of controlling the temperature of the bath with use of the energy control module E.

At the start 4, the energy control module E is connected to the bath control system C via a serial port, preferably including a universal asynchronous receiver-transmitter (UART). When the connection 2 is physically established, an initiation step 5 is performed. Herein the energy control module demands an identity (ID) of the bath control system C and confirms the receipt of the ID when it has received it. A valid communication between the energy control module E and the bath communication system C has now been established. Alternatively, a control system C wherein the functions of the energy control module E are integrated from the start is used.

As the next step 6 of the method, the energy control module E receives a status update from the bath control system C via the connection 2. A decoding 7 of the status information from the bath control system C is then performed in the energy control module E. In the integrated system, the status information may not necessarily have to be decoded as a separate step; it may already be in a form which is readable by all units performing the disclosed method. The decoded information, or a relevant part thereof, is sent to the server S in the following step 8 of the method. The sending 8 of the information is either performed via the connection 3 and partly wirelessly via the internet communication device W, or completely wirelessly both to the internet connection device W and from there to the server S. In the integrated control system C, there may not be a need for a separate internet communication device W, since this functionality is already integrated in the control system C. In further alternative embodiments, the functions of the internet communication device W may be integrated with the functions of the energy control module E in a separate unit. Also, in some other embodiments, the functions of the internet communication device W may be integrated with the functions of the control system C only, while the functions of the energy control module E are performed by a separate unit. Hereby there are options for integrating the disclosed functions in existing bathing systems as needed.

As a result of processing 9 in the server S, a decision will be made either to heat the bath or not.

The server S will be regularly, e. g. hourly, or even more often, updated with ambient information from other sources than the bathing system or the user, in particular one or more parameters regarding the scarcity of energy. Such information may be received from e. g. a database of the energy supplier and may be one factor whereon the decision to heat the bath B is made. At such times when the energy is scarce, the processing performed in the server S may result in a decision not to heat the bath B. The scarcity may be expressed by a high price per unit of energy, or, in extreme cases, by a decision from public authorities not to heat non-essential equipment. If this happens, an extraordinary stop parameter is activated in the server. The user may input their desire regarding their preferred limit for the scarcity parameter, e. g. a maximum acceptable price. If the value of the scarcity parameter exceeds the user's limit, the bath may not be heated, or the heating may be delayed until the scarcity parameter has a lower value. The user set limit may be entered directly into the control system C or via the user's cell phone P. If the extraordinary stop parameter has been activated in the server, this will overrule any user set limit for the scarcity parameter, and the user is typically unable to change the extraordinary stop parameter.

The user may also input time periods of desired use of the bath B. If this time is at a distant time in the future, the bath may not be heated until a time close to the desired time of use. Also, the user may enter values for the maximum effect to be used, which may be useful in areas where the maximum effect value during a time period may affect the price. If a maximum effect limit has been set, the heating may have to start earlier than if a higher effect could be used for the heating. The maximum effect limit may also be set by the supplier of electricity or by relevant public authorities.

Another example of ambient information that may be supplied to the server S is weather information, in particular present and predicted temperatures. This information may be used for predicting the amount of time that is needed for heating the bath B to a desired temperature at a future point in time. Also, the bathing system may utilize information from the past, in order to assess the influence of ambient temperatures etc. on the temperature of a particular bath. B The algoritms for prediction of the time needed for heating the bath B may be continuously improved hereby.

The server S may be updated in other respects as well, i. e. regarding its procedure of determining whether or when the bath B is to be heated.

The control system C communicates frequently, e. g. once per minute, the status of the bath, such as its present temperature, elapsed time since its last filtering cycle, on/off status of its pumps, lights, etc. These values, in particular the temperature, are compared with the desired values set by the user. The desired values may refer to a desired temperature at the present time or to a desired temperature some time in the future. Based on the temperature differences, the desired point in time when the desired temperature should be reached, the desired maximum effect to be used, a decision is taken whether there is a need to start or continue to run the heater or heaters. If there is a need to start/run at least one heater, a comparison between the user's limit for the scarcity parameter and the present, updated value of the scarcity parameter. If the present scarcity parameter is less than the limit set by the user, the heater may actually be started, or continue to be run. However, if the extraordinary stop parameter is activated, the heater will not start, or, as the case may be, will be stopped.

In a similar way decisions are taken for starting and running the pump and filtering systems. On one hand, a decision is taken whether there is at all a need to start/continue the procedure. Secondly, a decision is taken whether the present energy scarcity parameter is lower than the desired maximum value. Finally, the extraordinary stop parameter, which may stop the procedure if it is activated, is checked.

There may also be decisions regarding safety procedures that will allow the running of the heater and/or filtering pump to such an extent that the bath B is not damaged, e. g. by freezing. Even the extraordinary stop parameter may be overruled by the safety procedure decisions.

In some preferred embodiments of the present disclosure, activation of the extraordinary stop parameter may be accompanied by, or matched with, information of present and predicted temperatures. The server S may take account of this information in making the decision of whether to heat the bath B. In a practical application, a very low temperature in the bath B may be acceptable, as long as there is no risk of ambient temperatures below the freezing point. If there is a risk of frost, on the other hand, the lowest allowable temperature in the bath B must be set higher, to ensure that no part of the bathing system, even the parts that are most distant from the temperature sensor, freezes.

After the extraordinary stop has been activated for a certain time period, and after periods of accidental power cuts, a large number of baths B in the same geographical area and communicating with the same server S may need to be heated at the same time. In order to avoid an excessive load on the power supply system, the restart time and the heating effect for the individual baths B may be staggered. The order of priority between the baths needing to be heated will primarily be based on their respective risks of damage.

It should be noted that the decisions need not be taken in the same order as stated above. In most cases the comparisons and decisions are made so quickly that the actual order of them is irrelevant.

For information, the status of the bath B and the result of the decisions that have been taken are communicated to the user, via a display on the control system C or the cell phone P, or both. The user will then know e. g. why the bath has not reached the desired temperature, and unnecessary troubleshooting is avoided.

If the result of the decision in the server S is Yes (Y), i. e. that the bath B is to be heated, the energy control module E receives 10 a positive indication from the server S. The energy control module E will then check 11 with the bath control system C if a rest mode of the bathing system 1 is active. If the rest mode is active, it will be switched off 12 by an instruction to the bath control system C in a correct format from the energy control module E. If the rest mode is not active, the step 12 of switching off will be bypassed. Thereafter the energy control module E will determine 13 whether a high range setting for the temperature is active in the bath control system C. If the high range setting is not active, it will be activated 14 by an instruction to the bath control system C in a correct format from the energy control module E. If the high range setting is already active, the activation step 14 will be bypassed.

If the result of the decision whether to heat the bath B is No (N), i. e. that the bath B is not to be heated, the energy control module E receives 15 a negative indication from the server S. The energy control module E will check 16 with the bath control system C if the rest mode of the bathing system 1 is active. If not, it will be switched on 17 by an instruction to the bath control system C in a correct format from the energy control module E. If the rest mode is already active, the step 17 of switching on the rest mode will be bypassed. In a similar way, the high range setting will be checked in step 18, and it will be inactivated in step 19 if it is not already inactive. Further a setting of a default temperature of the bath B will be checked in step 20. If there is no value for this setting, a value corresponding to the lowest allowable temperature in the bath B will be inserted 21 as the default temperature. This temperature is selected to be at a level with a considerable margin to the freezing temperature, since, as explained above, the temperature sensor in the bath B may not indicate the lowest temperature of the bath B.

After one of the above sequences for a positive or a negative decision, respectively, has been performed, the method comprises returning to the status update step 6, and the procedure will be performed again, possibly with new data from the bath control system C or from external databases to the server S. In order to limit the processing, there may be a time delay before a new status update 6 is requested. In some embodiments, such updates may be requested only once or a few times per hour.

All in all, the present disclosure relates to an interactive method and system, which function automatically, with possibilities for the user to input their desires for temperature, time of use, preferred limits for scarcity parameters. The system works and adapts itself in real time, and the user does not need to make any other manual updates other than their preferences. An overall purpose, on a large scale, of the method and system is to shift the use of electrical power from time periods with high scarcity to time periods with low scarcity. A benefit for the individual user may be to heat their bath B at a time when the scarcity is low, which may mean a minimization of heating costs.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. Method for controlling the energy used in a bathing system (1), the bathing system (1) comprising a bath (B), a heater for the bath (B), a thermostat and a bath control system (C), with an interface, the method comprising the steps:
- user preferences regarding temperature, maximum value of an energy scarcity parameter, planned bathing, etc. are entered via the interface and sent to a remote server (S);
- status updates from the bath control system (C) are regularly sent to the remote server (S);
wherein
- the server (S) also periodically receives an energy scarcity parameter from an external source;
- the server (S) makes (9) a decision, based on the status update, the energy scarcity parameter and the user preferences, whether to heat the bathing system (1);
- the result of the decision (Yes/No) is sent (10, 15) to the bath control system (C).

2. The method according to claim 1, further comprising the steps:
- the server (S) occasionally receives an extraordinary stop parameter;
- the server (S) makes a decision not to heat the bathing system (1), disregarding the user preferences.

3. The method according to claim 1 or claim 2, further comprising the steps:
- setting (20) a lowest allowable temperature;
- the server (S) makes a comparison of the present temperature with the lowest allowable temperature from a safety aspect;
- comparing the present temperature of the bath to the lowest allowable temperature and disregarding the maximum value of the energy scarcity parameter; and
- starting the heater of the bath, thereby overriding any current negative decision of the server (S).

4. The method according to any of claims 1 to 3, further comprising the steps:
- a rest mode or a ready mode of the bath (B) is selected (11, 16); and
- a high temperature range or a low temperature range is selected (13, 18) depending on the result of the decision whether to heat the bathing system (1).

5. The method according to any of claims 1 to 4, further comprising the steps (5):
- an ID of the bath control system (C) is requested by the server (S);
- the ID is sent from the bath control system (C) to server (S);
- the server (S) sends a confirmation of receipt of the ID to the bath control system (C).

6. The method according to any of claims 1 to 5, further comprising the steps:
- the server (S) takes account of all its decisions to heat for a large number of bathing systems (1) communicating with the server (S);
- sends its decisions to the respective bath control systems (C) in a time staggered manner.

7. Energy control module (E) for a recreational bathing system (1), the bathing system (1) comprising a bath (B), a heater for the bath (B), a thermostat and a bath control system (C) with an interface for receiving status information, the energy control module (E) comprising a communication unit for input and output of data from the bath control system (C) and instructions to the bath control system (C), such that the temperature of the bathing system (1) may be regulated, wherein the energy control module (E) is configured to send data from the bath control system (C) to a remote server (S), and configured to receive a decision whether to heat the bathing system (1) from the remote server (S), and the energy control module (E) is configured to formulate and send instructions to the bath control system (C) based on the decision of the remote server (S), such that the consumed energy for heating the bath (B) is minimized.

8. Energy control module (E) according to claim 7, wherein the energy control module (E) is configured to receive information from units connected to the bath control system (1) and controlled thereby.

9. Energy control module (E) according to claim 7 or claim 8, wherein the energy control module (E) is configured to receive serial data from the bath control system (C) via a UART (2).

10. Energy control module (E) according to any of claims 7 to 9, wherein an internet communication function is included in the module.
